# EUROPEAN PATENT SPECIFICATION

(11) **EP 3 860 935 B1**
(45) Date of publication and mention of the grant of the patent: **30.11.2022**
(21) Application number: 19795650.1
(22) Date of filing: 04.10.2019
(51) Int. Cl.: B65G 17/06, B65G 17/10, B65G 23/14

(54) **CONVEYOR CAROUSEL FOR TRANSFERRING BAGGAGE**
FÖRDERKARUSSELL ZUM ÜBERFÜHREN VON GEPÄCK
CARROUSEL CONVOYEUR POUR TRANSFERT DE BAGAGES

(30) Priority: 04.10.2018 IT 201800009167
(43) Date of publication of application: 11.08.2021
(73) Proprietor: Material Handling Systems S.r.l., 00149 Roma (IT)
(72) Inventor: TESTANI, Emanuela, 00037 Segni (IT)
(74) Representative: Celona, Antonio
(86) International application number: PCT/IB2019/058457
(87) International publication number: WO 2020/070698

(56) References cited:
- WO-A1-2011/086483
- DE-A1-102009 052 985
- FR-A7- 2 109 697
- US-A- 3 881 592
- US-A1- 2012 145 519
- US-B2- 8 393 462

## Description

### Field of the invention

The present invention relates to a conveyor carousel for a baggage claim area, particularly suitable for use in airports.

### Background art

Different baggage conveyor systems are known and are often used in commercial airports to convey baggage from a loading area to a baggage claim area where the baggage is moved continuously until required. The part of this type of baggage conveyor system, which generally moves the baggage continuously, is often referred to as a baggage carousel.

This baggage conveyor carousel is characterized by a plurality of stainless steel or rubber plates or pallets on which the baggage rests.

These plates are arranged in succession and partially overlapping one another. During the movement of the carousel, the plates move relative to one another, particularly along the curved stretches of the carousel.

Disadvantageously these carousels are very cumbersome, having high inner and outer radii of curvature of the curved stretches of the carousel itself.

A further problem relates to safety. Indeed, in the known carousels, in the passage from a straight stretch to a curved stretch, which is convex with respect to the outside of the carousel, i.e. convex with respect to the corresponding waiting area of the passengers to claim their baggage, the outer ends of the plates tend to spread with respect to the adjacent one, thus creating a void which, if not adequately covered, implies a risk for users waiting for baggage.

For example, a child could easily insert his or her fingers into this void which is created only temporarily between the plates and which, by closing almost immediately during the movement, could lead to even serious injury of the child. An example of a known conveyor carousel is disclosed in document US3881592A.

US2012145519A1 discloses a conveyor carousel according to the preamble of claim 1.

The need to provide a conveyor carousel capable of overcoming the aforesaid drawbacks is therefore felt.

### Summary of the invention

It is an object of the present invention to provide a conveyor carousel, particularly suitable for a baggage claim area of an airport, which has a significantly smaller footprint with respect to the solutions of the prior art.

It is another object of the present invention to provide a conveyor carousel which guarantees greater safety for users waiting for baggage.

The present invention achieves at least one of such and other objects which will become apparent in light of the present description, by means of a conveyor carousel which, in accordance with claim 1, defines a closed route, having an outer periphery and an inner periphery, and comprises:
- a fixed base structure provided, along said closed route, with an inner guide surface and at least one outer guide surface;
- a plurality of support members transverse to the inner guide surface and to the outer guide surface, each support member being provided with at least one first wheel adapted to slide on said inner guide surface and with at least one second wheel adapted to slide on said outer guide surface;
- a plurality of plates, each plate being coupled to a respective support member, and said plates partially overlapping one another and defining together a resting surface for the baggage, movable along said closed route;
- a movement chain, each link of said movement chain being integrally fixed to a respective support member;
- at least one motor adapted to transmit a motion to said movement chain and, therefore, to the plurality of support members for moving the plates together along said closed route;

wherein said movement chain is arranged along the outer periphery of the closed route;
wherein a plurality of elastic longitudinal elements is provided, arranged in sequence one after the other along the outer periphery, so as to cover the outer ends of the plates, and connected to one another so as to allow a mutual distancing and approaching along curvilinear sections of said closed route;
wherein each elastic longitudinal element has a longitudinal opening communicating with a longitudinal cavity thereof open at the ends thereof;
and wherein an outer end of each support member is provided with an upward projection provided, on the inner side of the carousel, with at least one idle wheel;
whereby the idle wheels are inserted into said longitudinal cavity and the surface of the elastic longitudinal element provided with the longitudinal opening lies on the inner side, with respect to the carousel, of the projection.

Advantageously, the conveyor carousel of the invention has a modularity that facilitates its installation and also maintenance.

Further features and advantages of the present invention will become more apparent in light of detailed description of preferred, but not exclusive, embodiments.

The dependent claims describe particular embodiments of the invention.

### Brief description of the drawings

The description of the invention refers to the accompanying drawings, which are provided by way of non-limiting example, in which:

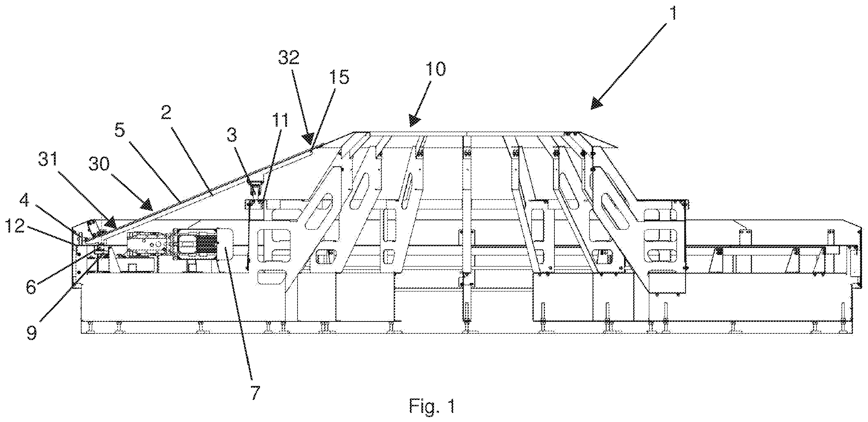

Figure 1 shows a side view of part of the structure of the carousel of the invention;
Figure 2 shows an enlargement of part of the structure in Figure 1;

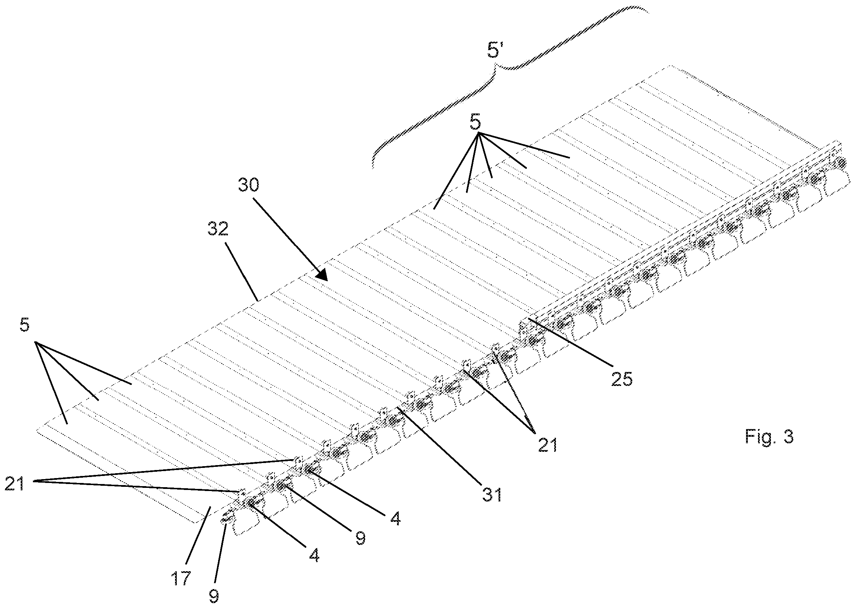

Figure 3 shows a perspective view of a part of the carousel of the invention;
Figure 4 shows an enlargement of part in Figure 3;
Figure 5 shows a side view of a further part of the carousel of the invention;
Figure 6 shows an enlargement of the side view in Figure 5.

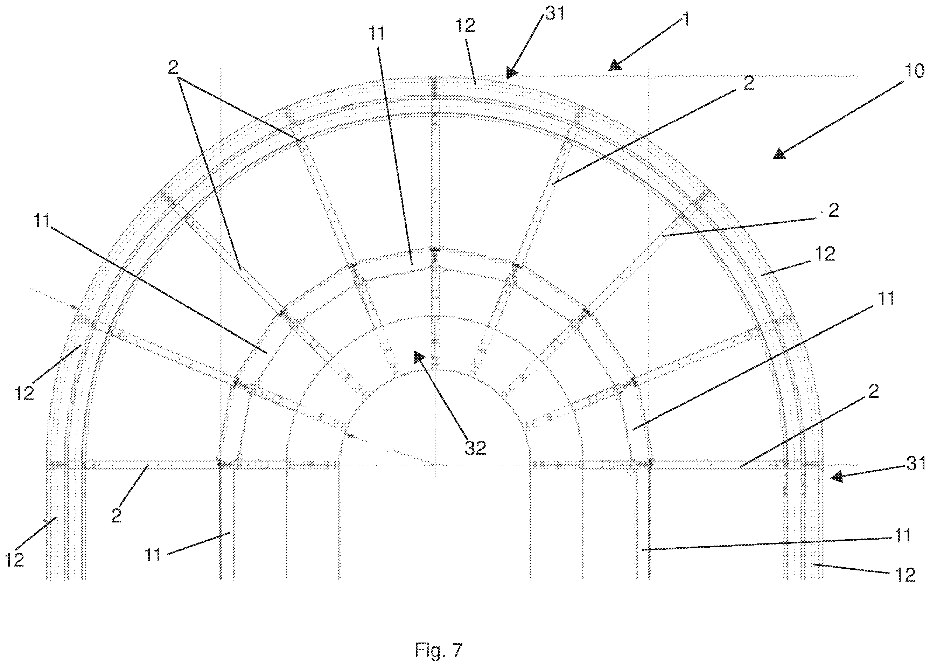

Figure 7 shows a top view of part of the structure of the carousel of the invention;
Figure 8 shows a perspective view of some details of the carousel of the invention;
Figure 9 shows a section view of a part of the carousel of the invention;
Figure 10 shows a top view of some of the components in Figure 9.

### Description of exemplary embodiments of the invention

With reference to the Figures, an example of a carousel 1 for conveying baggage, which is the object of the present invention, is shown.

The carousel of the invention defines a resting surface 30 for the baggage which can move along a closed route or circuit, which has an outer periphery 31 and an inner periphery 32.

The carousel of invention comprises:
- a fixed base structure 10 provided, along said closed route, with an inner guide surface 11 and at least one outer guide surface 12;
- a plurality of support members 2, mutually distanced along the closed route and transverse both to the inner guide surface 11 and to the outer guide surface 12, each support member 2 being provided with at least one first wheel 3 sliding on the inner guide surface 11 and with at least one second wheel 4 sliding on the outer guide surface 12;

- a plurality of plates 5, each plate 5 being coupled to a respective support member 2, and said plates 5 being partially overlapping one another and defining together a resting surface 30 for the baggage, movable along the closed route;
- a movement chain 6, each link 8 of said movement chain being integrally fixed to a respective support member 2;
- at least one motor 7 to transmit a motion to the movement chain 6 and, therefore, to the support members 2 for moving the plates 5 together along the closed route. Advantageously, the movement chain 6 is arranged along the outer periphery 31 of the closed route. Unlike solutions in which the movement chain is arranged at a central zone of the closed route, intermediate between the outer periphery and the inner periphery, this constructional arrangement allows achieving radii of curvature of the curved stretches of the closed route, and therefore of the carousel itself, which are significantly lower than the known carousels both at the outer periphery 31 and at the inner periphery 32.

In the carousel, there can be right-hand or left-hand curves considering a direction of travel. The right-hand curves, also named normal bends, are convex curves with respect to the outside of the carousel, i.e. convex with respect to the corresponding waiting area for passengers to claim their baggage. The left-hand curves, also named counter-bends, are concave curves with respect to the outside of the carousel, i.e. concave with respect to the corresponding waiting area for passengers to claim their baggage.

By way of example, considering a given length of the support members 2, preferably inclined with respect to the horizontal by an angle from 15° to 30°, and therefore considering a given width of the resting surface 30 for the baggage in an interval between 1300 and 1700 mm, the radius of curvature of the aforesaid convex curves at the outer periphery 31 can vary from 2200 to 2500 mm and the radius of curvature of the convex curves at the inner periphery 32 can vary from 450 to 650 mm; while the radius of curvature of the aforesaid concave curves at the outer periphery 31 can vary from 3400 to 3600 mm and the radius of curvature of the concave curves at the inner periphery 32 can vary from 4500 to 5500 mm.

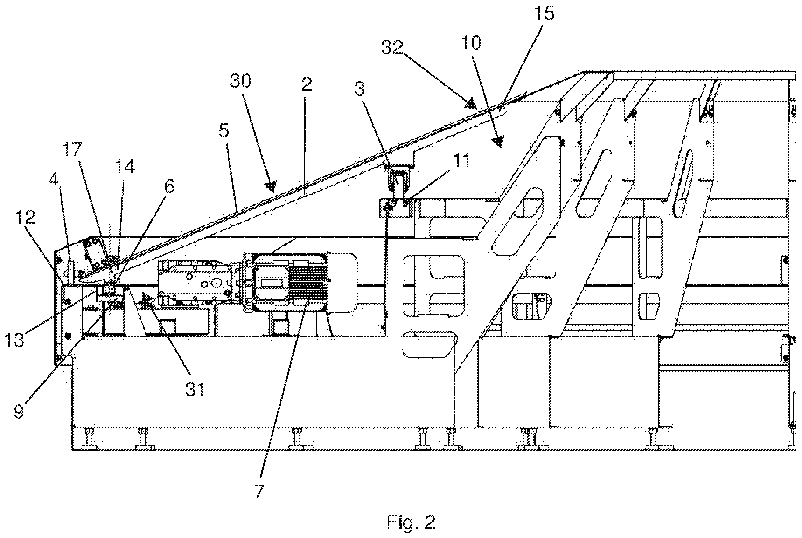

Preferably, each link 8 of the movement chain 6 is connected at the bottom to an outer end 14 of a respective support member or crossbar 2 (Figure 2).

In particular, the movement chain 6 is arranged near said at least one outer guide surface 12, preferably provided on an externally peripheral edge of the base structure 10.

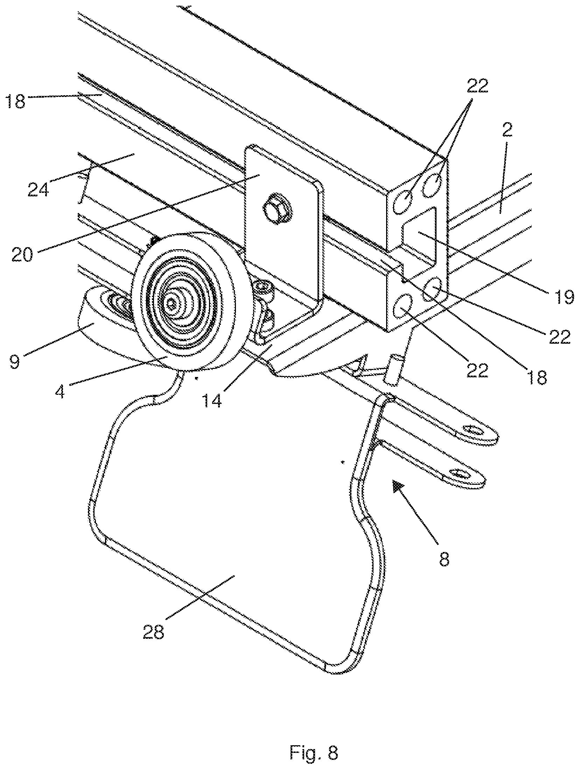

In a variant of the invention, each link 8 is provided with a flat protuberance 28, and a transmission member 26 is provided, which can be actuated by the motor 7 to transmit the motion to the links 8 of the movement chain 6 by contact with at least some of the flat protuberances 28 (Figures 8-10).

For example, the transmission member 26 is a belt that transmits motion to the links 8 by friction with at least some of the flat protuberances 28. In particular, during the forward movement of the movement chain 6, the flat protuberances 28 of the links 8 cross a longitudinal gap defined between the moving belt 26 and a plurality of contrast wheels 27, the rotation axes of which define a plane parallel to the belt stretch in contact with the flat protuberances 28.

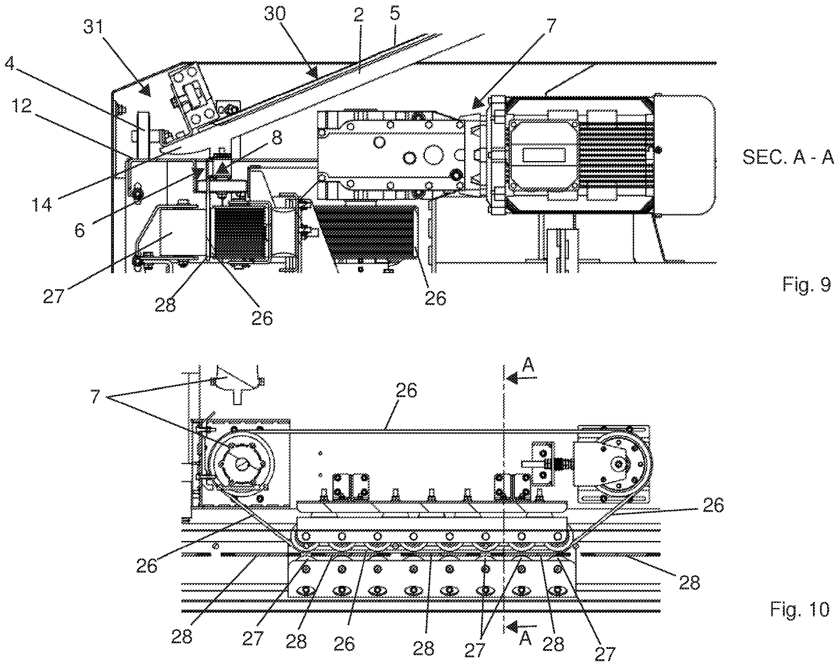

In the example in Figures 9 and 10, the flat protuberances 28 protrude downwards, preferably vertically, from the respective links 8 of the movement chain 6.

Motor 7, belt 26, contrast wheels 27 and movement chain 6 are located under the closed route of the carousel of the invention, i.e. under the support members 2.

Preferably, a respective further wheel 9 is fixed onto each link 8, said further wheel being adapted to slide on a further guide surface 13 of the base structure 10 (Figure 2), preferably provided on an inner side of an outer peripheral edge of said base structure 10.

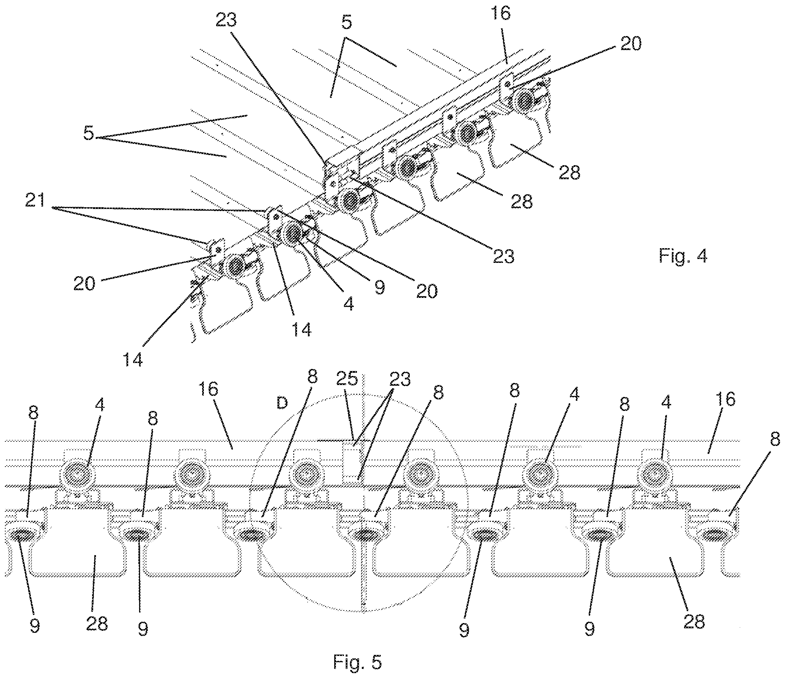

The rotation axis of each wheel 4 and the rotation axis of the corresponding wheel 9 are skewed axes (Figures 4-6). In particular, these two skewed axes can also be mutually orthogonal. In this case, the outer guide surface 12 and the further guide surface 13 are mutually orthogonal (Figure 2).

A further advantage of the carousel of the invention is the provision of a plurality of elastic longitudinal elements 16, arranged in sequence one after the other along the outer periphery 31 of the closed route, so as to cover the outer ends 17 of the plates 5, and connected to one another so as to allow a mutual distancing and approaching along the curvilinear sections of the closed route.

These elastic longitudinal elements 16 are preferably made of rubber, e.g. EPDM. In a preferred variant, each elastic longitudinal element 16 covers the outer ends 17 of a respective group 5' of plates 5 and is integrally fixed to an outer end 14 of a support member 2 corresponding to a first plate of said group 5' of plates 5. The elastic longitudinal element 16 is slidingly connected with respect to the other plates of the group 5'.

As shown in Figure 8, each elastic longitudinal element 16 has, on one side, a longitudinal opening 18 communicating with a longitudinal cavity 19 thereof, which is open at the two ends of the same elastic longitudinal element.

The outer end 14 of each support member 2 is provided with an upward projection 20 provided, on the inner side of the carousel, with at least one idle wheel 21, shown in greater detail in Figure 4.

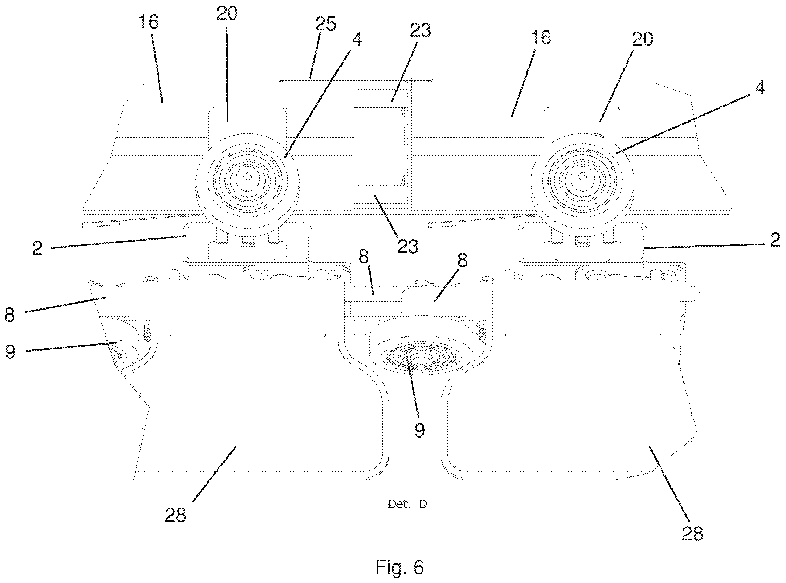

The idle wheels 21, corresponding to a group 5' of plates 5, are inserted into the longitudinal cavity 19 of a respective elastic longitudinal element 16, while the surface 24 of the elastic longitudinal element 16, provided with the longitudinal opening 18, lies on the inner side, with respect to the carousel, of the projection 20 (Figures 6 and 8).

Preferably, at least two holes 22 are provided at the two ends of each elastic longitudinal element 16 in which corresponding guide pins 23 (Figure 4-6) are inserted which slidingly connect each elastic longitudinal element 16 to the next one, so as to guide their mutual distancing and approaching.

In the example in Figure 8, there are four holes 22, two above and two below the longitudinal cavity 19, for the insertion of four corresponding guide pins 23.

For each pair of consecutive elastic longitudinal elements 16 there is provide a covering element or joint 25 which covers a gap provided between an elastic longitudinal element 16 and the next, the aforementioned guide pins 23 being present in said gap.

The covering element 25 is integrally fixed to the end of only one of the two elastic longitudinal elements 16 of the pair.

In particular, considering the forward movement direction of the carousel, the covering element 25 is integrally fixed to the front end of the second longitudinal elastic element of the considered pair, while the rear end of the first elastic longitudinal element of the considered pair can slide slightly forwards or backwards inside said covering element 25 along the guide pins 23 which are integrally fixed in holes 22 of the second elastic longitudinal element.

By way of example, along a straight stretch of the carousel, this gap between one elastic longitudinal element 16 and the next one is, for example, in the range from 30 mm to 50 mm. In the case of curved stretches of the carousel this gap reaches, for example, a maximum value in the range from 70 mm to 90 mm in the case of convex curves, while it reaches, for example, a minimum value in the range from 15 mm to 30 mm in the case of concave curves.

During the movement of the resting surface 30 along the closed route, in the passage from a straight stretch to a curved stretch, convex with respect to the outside of the carousel, i.e. convex with respect to the corresponding passenger waiting area to claim their baggage, the outer ends 17 of the plates 5 tend to temporarily spread with respect to the other adjacent ones, thus creating a void between the plates, which closes in the second half of the curved stretch, i.e. in the passage from said curved stretch to a subsequent new straight stretch. Advantageously, the presence of the elastic longitudinal elements 16 allows to always safely covering the outer ends 17 of the plates 5 and the voids that are created therebetween in the transition from a straight stretch to a curved stretch.

In particular, with the carousel according to the invention, in the transition from a straight stretch to a convex curved stretch, each elastic longitudinal element 16 is stretched anteriorly because of the distancing between the outer ends 17 of the plates 5, whereby temporarily the rear end of the elastic longitudinal element slides inside the covering element 25 along the guide pins 23 and moves away from the front end of the next elastic longitudinal element 16, thus increasing the gap defined above. On the other hand, in the next transition from the curved stretch to the new straight stretch, the two elastic elements 16 come closer with the rear end of the first elastic element that slides in direction opposite to the preceding one, always inside the covering element 25 along the guide pins 23, thus re-establishing the initial gap. Therefore, along the entire route, the outer ends 17 of the plates 5 and the voids, which are created therebetween, are always completely covered by the elastic elements 16 and the covering elements 25 interposed therebetween.

## Claims

1. A conveyor carousel (1) for transferring baggage, the carousel defining a closed route, having an outer periphery (31) and an inner periphery (32), and comprising
- a fixed base structure (10) provided, along said closed route, with an inner guide surface (11) and at least one outer guide surface (12);
- a plurality of support members (2) transverse to the inner guide surface (11) and to the outer guide surface (12), each support member (2) being provided with at least one first wheel (3) adapted to slide on said inner guide surface (11) and with at least one second wheel (4) adapted to slide on said outer guide surface (12);
- a plurality of plates (5), each plate (5) being coupled to a respective support member (2), and said plates (5) partially overlapping one another and defining together a resting surface for the baggage, movable along said closed route;
- a movement chain (6), each link (8) of said movement chain being integrally fixed to a respective support member (2);
- at least one motor (7) adapted to transmit a motion to said movement chain (6) and, therefore, to the plurality of support members (2) for moving the plates (5) together along said closed route;
wherein said movement chain (6) is arranged along the outer periphery (31) of the closed route;
wherein there is provided a plurality of elastic longitudinal elements (16), arranged in sequence one after the other along the outer periphery (31), so as to cover the outer ends (17) of the plates (5), and connected to one another so as to allow a mutual distancing and approaching along curvilinear sections of said closed route;
**characterized in that**
each elastic longitudinal element (16) has a longitudinal opening (18) communicating with a longitudinal cavity (19) thereof open at the ends thereof; and wherein an outer end (14) of each support member (2) is provided with an upward projection (20), which is provided with at least one idle wheel (21) on the inner side of the carousel;
whereby the idle wheels (21) are inserted into said longitudinal cavity (19) and the surface of the elastic longitudinal element (16) provided with the longitudinal opening (18) lies on the inner side, with respect to the carousel, of the projection (20).

2. A conveyor carousel according to claim 1, wherein each link (8) is connected to the outer end (14) of a respective support member (2).

3. A conveyor carousel according to claim 1 or 2, wherein said movement chain (6) is arranged in proximity of said at least one outer guide surface (12), preferably provided on an outer peripheral edge of the base structure (10).

4. A conveyor carousel according to any one of the preceding claims, wherein each link (8) is provided with a flat protuberance (28), and wherein a transmission member (26) is provided, which can be actuated by said at least one motor (7) and is adapted to transmit the motion to the links (8) of the movement chain (6) by contact with at least some flat protuberances (28);
preferably wherein said transmission member (26) is a belt adapted to transmit the motion to the links (8) by friction with at least some flat protuberances (28), and wherein the flat protuberances (28) of the links (8) are adapted to cross a longitudinal gap defined between the belt (26) and a plurality of dragging wheels (27).

5. A conveyor carousel according to claim 4, wherein a third wheel (9) is fixed onto each link (8), said third wheel being adapted to slide on a further guide surface (13) of the base structure (10), preferably provided on an inner side of an outer peripheral edge of said base structure (10).

6. A conveyor carousel according to claim 5, wherein the rotation axis of a second wheel (4) and the rotation axis of the corresponding third wheel (9) are skewed axes.

7. A conveyor carousel according to any one of the preceding claims, wherein said elastic longitudinal elements (16) are made of rubber.

8. A conveyor carousel according to claim 1 or 7, wherein each elastic longitudinal element (16) covers the outer ends (17) of a respective group (5') of plates (5) of said plurality of plates (5), and is integrally fixed to the outer end (14) of a support member (2) corresponding to a first plate of said group (5') of plates (5).

9. A conveyor carousel according to any one of the preceding claims, wherein at least two holes (22) are provided at the ends of each elastic longitudinal element (16), wherein guide pins (23) are inserted in said at least two holes, said guide pins connecting each elastic longitudinal element (16) to the next one, so as to guide said mutual distancing and approaching.

10. A conveyor carousel according to claim 9, wherein a covering element (25) is provided for each pair of consecutive elastic longitudinal elements (16), said covering element being adapted to cover a gap provided between an elastic longitudinal element (16) and the next one, said guide pins (23) being present in said gap, and said covering element (25) being integrally fixed to the end of only one of the two elastic longitudinal elements (16) of the pair.

## Patentansprüche

1. Fördererkarussell (1) zum Transportieren von Gepäck, wobei das Karussell eine geschlossene Strecke definiert, einen Außenumfang (31) und einen Innenumfang (32) aufweist und Folgendes umfasst
- eine feste Grundstruktur (10), die entlang der geschlossenen Strecke mit einer inneren Führungsfläche (11) und mindestens einer äußeren Führungsfläche (12) versehen ist;
- eine Vielzahl von Stützelementen (2) quer zur inneren Führungsfläche (11) und zur äußeren Führungsfläche (12), wobei jedes Stützelement (2) mit mindestens einem ersten Rad (3), das über die innere Führungsfläche (11) gleiten kann, und mit mindestens einem zweiten Rad (4), das auf die äußere Führungsfläche (12) gleiten kann, versehen ist;
- eine Vielzahl von Platten (5), wobei jede Platte (5) mit einem entsprechenden Stützelement (2) verbunden ist und die Platten (5) einander teilweise überlappen und zusammen eine Auflagefläche für das Gepäck bilden, die entlang der geschlossenen Strecke beweglich ist;
- eine Bewegungskette (6), wobei jedes Glied (8) der Bewegungskette integral an einem entsprechenden Stützelement (2) befestigt ist;
- mindestens einen Motor (7), der so beschaffen ist, dass er eine Bewegung auf die Bewegungskette (6) und somit auf die Vielzahl von Stützelementen (2) überträgt, um die Platten (5) entlang der geschlossenen Strecke gemeinsam zu bewegen;
wobei die Bewegungskette (6) entlang des Außenumfangs (31) der geschlossenen Strecke angeordnet ist;
wobei eine Vielzahl von elastischen Längselementen (16) vorgesehen ist, die nacheinander entlang des Außenumfangs (31) angeordnet sind, um die äußeren Enden (17) der Platten (5) zu bedecken, und die miteinander verbunden sind, um einer gegenseitigen Entfernung und Annäherung entlang gekrümmter Abschnitte der geschlossenen Strecke zu ermöglichen;
**dadurch gekennzeichnet, dass**
jedes elastische Längselement (16) eine Längsöffnung (18) aufweist, die mit einem an seinen Enden offenen Längshohlraum (19) in Verbindung steht;
und wobei ein äußeres Ende (14) jedes Stützelements (2) mit einem nach oben gerichteten Vorsprung (20) versehen ist, der mit mindestens einem Leerlaufrad (21) auf der Innenseite des Karussells versehen ist;
wobei die Leerlaufräder (21) in den Längshohlraum (19) eingesetzt sind und die mit der Längsöffnung (18) versehene Oberfläche des elastischen Längselements (16) auf der in Bezug auf das Karussell inneren Seite des Vorsprungs (20) liegt.

2. Fördererkarussell nach Anspruch 1, wobei jedes Glied (8) mit dem äußeren Ende (14) eines entsprechenden Stützelements (2) verbunden ist.

3. Fördererkarussell nach Anspruch 1 oder 2, wobei die Bewegungskette (6) in der Nähe der mindestens einen äußeren Führungsfläche (12) angeordnet ist, die vorzugsweise auf eine äußere Umfangskante der Grundstruktur (10) vorgesehen ist.

4. Fördererkarussell nach einem der vorhergehenden Ansprüche, wobei jedes Glied (8) mit einem flachen Vorsprung (28) versehen ist, und wobei ein Übertragungselement (26) vorgesehen ist, das durch den mindestens einen Motor (7) betätigt werden kann und angepasst ist, die Bewegung auf die Glieder (8) der Bewegungskette (6) durch Kontakt mit mindestens einigen flachen Vorsprüngen (28) zu übertragen;
wobei das Übertragungselement (26) vorzugsweise ein Riemen ist, der angepasst ist, die Bewegung auf die Glieder (8) durch Reibung mit mindestens einigen flachen Vorsprüngen (28) zu übertragen, und wobei die flachen Vorsprünge (28) der Glieder (8) angepasst sind, einen Längsspalt zu überqueren, der zwischen dem Riemen (26) und einer Vielzahl von Schleppenrädern (27) definiert ist.

5. Fördererkarussell nach Anspruch 4, wobei ein drittes Rad (9) an jedem Glied (8) befestigt ist, wobei das dritte Rad so angepasst ist, über eine weitere Führungsfläche (13) der Grundstruktur (10) zu gleiten, die vorzugsweise an einer Innenseite einer äußeren Umfangskante der Grundstruktur (10) vorgesehen ist.

6. Fördererkarussell nach Anspruch 5, wobei die Drehachse eines zweiten Rades (4) und die Drehachse des entsprechenden dritten Rades (9) schräge Achsen sind.

7. Fördererkarussell nach einem der vorhergehenden Ansprüche, wobei die elastischen Längselemente (16) aus Gummi hergestellt sind.

8. Fördererkarussell nach Anspruch 1 oder 7, wobei jedes elastische Längselement (16) die äußeren Enden (17) einer jeweiligen Gruppe (5') von Platten (5) der Vielzahl von Platten (5) abdeckt und integral an dem äußeren Ende (14) eines Stützelements (2) befestigt ist, das einer ersten Platte der Gruppe (5') von Platten (5) entspricht.

9. Fördererkarussell nach einem der vorhergehenden Ansprüche, wobei mindestens zwei Löcher (22) an den Enden jedes elastischen Längselements (16) vorgesehen sind, wobei Führungsstifte (23) in die mindestens zwei Löcher eingesetzt sind, wobei die Führungsstifte jedes elastische Längselement (16) mit dem nächsten verbinden, um die gegenseitige Entfernung und Annäherung zu führen.

10. Fördererkarussell nach Anspruch 9, wobei ein Abdeckelement (25) für jedes Paar aufeinanderfolgender elastischer Längselemente (16) vorgesehen ist, wobei das Abdeckelement so angepasst ist, dass es einen Spalt abdeckt, der zwischen einem elastischen Längselement (16) und dem nächsten vorhanden ist, wobei die Führungsstifte (23) in dem Spalt vorhanden sind und das Abdeckelement (25) integral an dem Ende von nur einem der beiden elastischen Längselemente (16) des Paares befestigt ist.

## Revendications

1. Carrousel convoyeur (1) pour le transfert de bagages, le carrousel définissant un parcours fermé, ayant une périphérie extérieure (31) et une périphérie intérieure (32), et comprenant
- une structure de base fixe (10) pourvue, le long dudit parcours fermé, d'une surface de guidage intérieure (11) et d'au moins une surface de guidage extérieure (12) ;
- une pluralité d'éléments de support (2) transversaux à la surface de guidage intérieure (11) et à la surface de guidage extérieure (12), chaque élément de support (2) étant muni d'au moins une première roue (3) adaptée pour glisser sur ladite surface de guidage intérieure (11) et d'au moins une seconde roue (4) adaptée pour glisser sur ladite surface de guidage extérieure (12) ;
- une pluralité de plaques (5), chaque plaque (5) étant couplée à un élément de support respectif (2), et lesdites plaques (5) se chevauchant partiellement l'une avec l'autre et définissant ensemble une surface d'appui pour les bagages, mobile le long dudit parcours fermé ;
- une chaîne de mouvement (6), chaque maillon (8) de ladite chaîne de mouvement étant fixé intégralement à un élément de support respectif (2) ;
- au moins un moteur (7) adapté pour transmettre un mouvement à ladite chaîne de mouvement (6) et, par conséquent, à la pluralité d'éléments de support (2) pour déplacer les plaques (5) ensemble le long dudit parcours fermé ;
dans lequel ladite chaîne de mouvement (6) est disposée le long de la périphérie extérieure (31) du parcours fermé ;
dans lequel il est prévu une pluralité d'éléments longitudinaux élastiques (16), disposés en séquence l'un après l'autre le long de la périphérie extérieure (31), de manière à couvrir les extrémités extérieures (17) des plaques (5), et connectés l'un à l'autre de manière à permettre un éloignement et un rapprochement mutuels le long de sections curvilignes dudit parcours fermé ;
**caractérisé en ce que**
chaque élément longitudinal élastique (16) présente une ouverture longitudinale (18) communiquant avec une cavité longitudinale (19) de celui-ci ouverte à ses extrémités ;
et dans lequel une extrémité extérieure (14) de chaque élément de support (2) est pourvue d'une saillie vers le haut (20), qui est munie d'au moins une roue folle (21) sur le côté intérieur du carrousel ;
dans lequel les roues folles (21) sont insérées dans ladite cavité longitudinale (19) et la surface de l'élément longitudinal élastique (16) pourvu de l'ouverture longitudinale (18) se trouve sur le côté intérieur, par rapport au carrousel, de la saillie (20).

2. Carrousel convoyeur selon la revendication 1, dans lequel chaque maillon (8) est relié à l'extrémité extérieure (14) d'un élément de support respectif (2).

3. Carrousel convoyeur selon la revendication 1 ou 2, dans lequel ladite chaîne de mouvement (6) est disposée à proximité de ladite au moins une surface de guidage extérieure (12), de préférence disposée sur un bord périphérique extérieur de la structure de base (10).

4. Carrousel convoyeur selon l'une quelconque des revendications précédentes, dans lequel chaque maillon (8) est pourvu d'une protubérance plate (28), et dans lequel un élément de transmission (26) est prévu, qui peut être actionné par ledit au moins un moteur (7) et est adapté pour transmettre le mouvement aux maillons (8) de la chaîne de mouvement (6) par contact avec au moins certaines protubérances plates (28) ;
de préférence dans lequel ledit élément de transmission (26) est une courroie adaptée pour transmettre le mouvement aux maillons (8) par friction avec au moins certaines protubérances plates (28), et dans lequel les protubérances plates (28) des maillons (8) sont adaptées pour traverser un espace longitudinal défini entre la courroie (26) et une pluralité de roues d'entraînement (27).

5. Carrousel convoyeur selon la revendication 4, dans lequel une troisième roue (9) est fixée sur chaque maillon (8), ladite troisième roue étant adaptée pour glisser sur une autre surface de guidage (13) de la structure de base (10), de préférence prévue sur un côté intérieur d'un bord périphérique extérieur de ladite structure de base (10).

6. Carrousel convoyeur selon la revendication 5, dans lequel l'axe de rotation d'une deuxième roue (4) et l'axe de rotation de la troisième roue correspondante (9) sont des axes obliques.

7. Carrousel convoyeur selon l'une quelconque des revendications précédentes, dans lequel lesdits éléments longitudinaux élastiques (16) sont réalisés en caoutchouc.

8. Carrousel convoyeur selon la revendication 1 ou 7, dans lequel chaque élément longitudinal élastique (16) couvre les extrémités extérieures (17) d'un groupe respectif (5') de plaques (5) de ladite pluralité de plaques (5), et est fixé intégralement à l'extrémité extérieure (14) d'un élément de support (2) correspondant à une première plaque dudit groupe (5') de plaques (5).

9. Carrousel convoyeur selon l'une quelconque des revendications précédentes, dans lequel au moins deux trous (22) sont prévus aux extrémités de chaque élément longitudinal élastique (16), dans lequel des broches de guidage (23) sont insérées dans lesdits au moins deux trous, lesdites broches de guidage reliant chaque élément longitudinal élastique (16) au suivant, de manière à guider lesdits éloignement et rapprochement mutuels.

10. Carrousel convoyeur selon la revendication 9, dans lequel un élément de couverture (25) est prévu pour chaque paire d'éléments longitudinaux élastiques consécutifs (16), ledit élément de couverture étant adapté pour couvrir un espace prévu entre un élément longitudinal élastique (16) et le suivant, lesdites broches de guidage (23) étant présentes dans ledit espace, et ledit élément de couverture (25) étant fixé intégralement à l'extrémité d'un seul des deux éléments longitudinaux élastiques (16) de la paire.
